Europäisches Patentamt

European Patent Office

Office européen des brevets

(11) Veröffentlichungsnummer: **0 307 724 B1**

(12) **EUROPÄISCHE PATENTSCHRIFT**

(45) Veröffentlichungstag der Patentschrift: **18.12.91**

(51) Int. Cl.⁵: **H02P 5/418**

(21) Anmeldenummer: **88114245.9**

(22) Anmeldetag: **01.09.88**

(54) **Schaltung zur Regelung der Drehzahl eines Motors.**

(30) Priorität: **16.09.87 DE 3731011**

(43) Veröffentlichungstag der Anmeldung:
**22.03.89 Patentblatt 89/12**

(45) Bekanntmachung des Hinweises auf die
Patenterteilung:
**18.12.91 Patentblatt 91/51**

(84) Benannte Vertragsstaaten:
**DE FR GB IT**

(56) Entgegenhaltungen:
**DE-A- 1 903 061**
**US-A- 3 549 972**

**ELEKTRONIK, Band 34, Nr. 4, 22. Februar
1985, Seiten 86-90, München, DE; W. FRANK:
"Phasenanschnittsteuerungen - problembezogen"**

(73) Patentinhaber: **TELEFUNKEN electronic GmbH
Theresienstrasse 2
W-7100 Heilbronn(DE)**

(72) Erfinder: **Nutz, Karl-Diether
Blumenstrasse 33
W-7101 Oedheim(DE)**

(74) Vertreter: **Maute, Hans-Jürgen, Dipl.-Ing.
TELEFUNKEN electronic GmbH Theresienstrasse 2
W-7100 Heilbronn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltung zur Regelung der Drehzahl eines Motors mit einem Regelverstärker, der einen Strom erzeugt, der von der Differenzspannung aus der der vorhandenen Drehzahl entsprechenden Spannung und der der gewünschten Drehzahl entsprechenden Spannung sowie von einem Strom gesteuert wird, der dem Regelverstärker zugeführt wird.

Die Drehzahl eines Motors wird im allgemeinen dadurch geregelt, daß die Drehzahl des Motors mit Hilfe eines Frequenz-/Spannungswandlers in eine drehzahlproportionale Spannung umgewandelt wird und diese Spannung sowie eine Spannung, die der gewünschten Drehzahl entspricht, einem Regelverstärker zugeführt werden, der einen Ausgangsstrom erzeugt, der von der Differenzspannung der beiden genannten Spannungen sowie von einem konstanten Strom abhängt, der mittels einer Stromquelle dem Regelverstärker zugeführt wird. Der Ausgangsstrom des Regelverstärkers wird über ein RC-Netzwerk einem Stellglied zugeführt, welches die Leistungszufuhr zum Motor derart beeinflußt, daß der Drehzahl-Istwert dem gewünschten Drehzahl-Sollwert möglichst nahekommt.

Drehzahlregelungen müssen heute häufig über einen sehr großen Drehzahlbereich (Spreizung bis 100:1) arbeiten. Der Erfindung liegt die Aufgabe zugrunde, eine Schaltung zur Regelung der Drehzahl eines Motors mit einem Regelverstärker anzugeben, der die Regelverstärkung kontinuierlich dem jeweiligen Drehzahlbereich anpaßt. Diese Aufgabe wird bei einer Schaltung der eingangs erwähnten Art nach der Erfindung durch das kennzeichnende Merkmal des Anspruchs 1 gelöst.

Das Wesen der Erfindung besteht also darin, daß der Ausgangsstrom des Regelverstärkers einer Drehzahlregelung nicht nur durch die Differenz der Ist-Spannung und der Soll-Spannung, sondern auch noch durch einen Strom gesteuert wird, der drehzahlabhängig ist. Dieser drehzahlabhängig Strom zur Steuerung des Regelverstärkers wird vorzugsweise durch die Ist-Spannung gesteuert. Durch die Erfindung erhält man jeweils optimale Regeleigenschaften für alle Drehzahlbereiche und die Steilheit des Regelverstärkers wird so geändert, daß sein Ausgangsstrom möglichst proportional zum Drehzahl-Istwert ist.

Die Erfindung wird im folgenden an einem Ausführungsbeispiel erläutert.

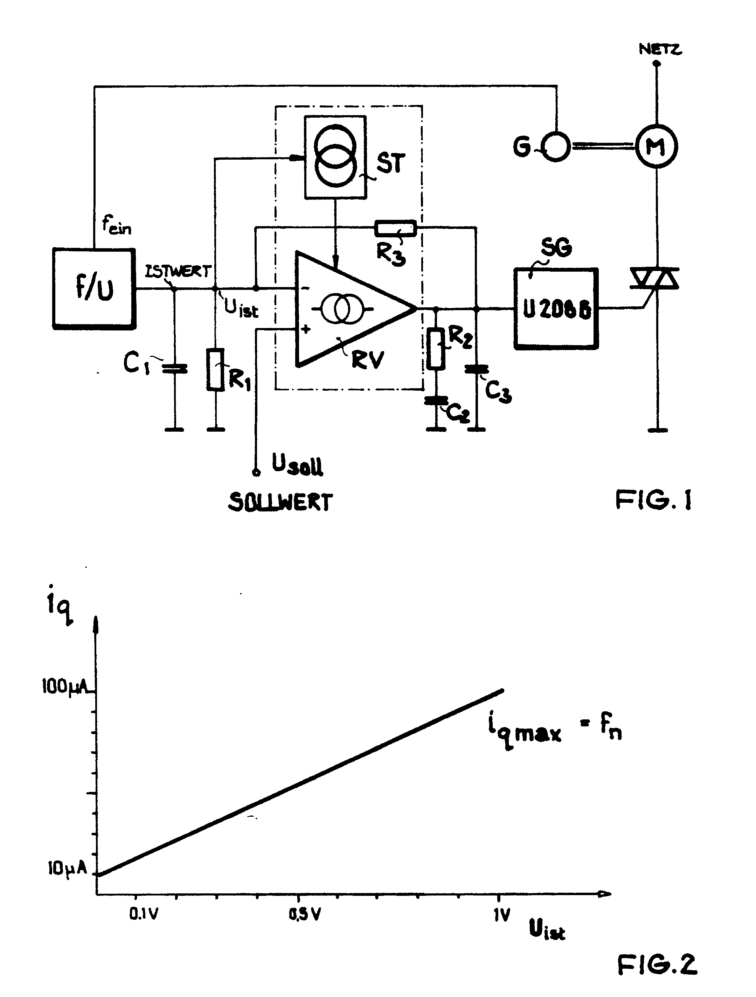

Dei Figur 1 zeigt eine Blockschaltung mit einem Regelverstärker zur Regelung der Drehzahl eines Motors. Die Drehzahl des Motors M wird bei einer solchen Schaltung zunächst in eine drehzahlproportionale Gleichspannung umgewandelt. Dies geschieht z. B. mit Hilfe eines Generators G, der aus der Drehzahl des Motors M ein elektrisches Signal erzeugt, dessen Frequenz proportional zur Drehzahl des Motors ist. Dem Generator G ist ein Frequenz-/Spannungswandler f/U nachgeschaltet, der aus dem Frequenzsignal des Generators G eine der Drehzahl des Motors proportionale Gleichspannung erzeugt. Die vom f/U-Wandler erzeugte Gleichspannung wird dem Tiefpaß C1R1 zugeführt, der die Gleichspannung zur besseren Glättung von ersten Störungen befreit. Der nachgeschaltete Regelverstärker RV wandelt die Differenz der Spannung $U_{ist}$ (Ausgangsspannung des Frequenz-/Spannungswandlers f/U) und der Spannung $U_{soll}$, die vom Anwender als drehzahlproportionale Sollwert-Spannung, beispielsweise mit Hilfe eines Potentiometers, vorgegeben wird, in eine Stromgröße um. Die Richtung des Ausgangsstromes des Regelverstärkers RV hängt davon ab, ob die Spannung $U_{ist}$ größer oder kleiner als die Soll-Spannung $U_{soll}$ ist. Ist die Spannung $U_{ist}$ zu klein, so wird die Widerstandskombination R2C2 bzw. R3C3 am Ausgang des Regelverstärkers RV durch einen positiven Ausgangsstrom des Regelverstärkers so weit hochgeladen, bis der Motor M durch eine dieser Stellgröße entsprechende Leistungserhöhung den Drehzahl-Sollwert erreicht. Im umgekehrten Fall (Spannung $U_{ist}$ zu groß) dreht sich der Ausgangsstrom des Regelverstärkers RV um und reduziert die Vorgabe für das Stellglied so weit, daß die dem Motor M zugeführte reduzierte Leistung zu einer möglichst geringen Regelabweichung, d. h. Abweichung von der Soll-Drehzahl, führt. Die Komponenten R3, R2C2 und C3 stellen dabei die aus der herkömmlichen Regelungstechnik bekannten Teilkomponenten eines PID-Reglers dar.

Bei der bekannten Drehzahl-Regelungstechnik mit einem Regelverstärker der beschriebenen Art läuft der Ausgangsstrom entsprechend der Differenzspannung aus der Spannung $U_{ist}$ und der Sollspannung $U_{soll}$ von einem Minimalwert $i_{qmin}$ bis zu einem fest vorgegebenen Maximalwert $i_{qmax}$ hoch. Nach der Erfindung ändert sich jedoch der Maximalwert $i_{qmax}$, und zwar in Abhängigkeit vom jeweiligen Drehzahlbereich. Nach der Erfindung erfolgt also eine Anpassung des $i_{qmax}$-Wertes des Ausgangsstromes des Regelverstärkers RV an die jeweilige Drehzahl bzw. an Drehzahlbereiche.

Diese Anpassung des $i_{qmax}$-Wertes des Ausgangsstromes des Regelverstärkers RV an die Drehzahl bzw. den Drehzahlbereich wird dadurch erreicht, daß dem Regelverstärker RV außer Spannungen $U_{ist}$ und $U_{soll}$ mittels der Stromquelle ST ein Strom zugeführt wird, den von der Spannung $U_{ist}$ und damit von der Drehzahl n des Motors abhängt. Als Regelverstärker mit gesteuertem Ausgangsstrom wird beispielweise ein Verstärker des Typs NE 5517 verwendet.

Die Steuerung der Stromquelle ST erfolgt beispielsweise derart, daß der Maximalwert $i_{qmax}$ des Regelverstärkers RV bei einer $U_{ist}$-Spannung von 100 mV z. B. 10 µA ist, während der Maximalwert $i_{qmax}$ des Regelverstärkers RV bei Spannungen $U_{ist}$ > 100 mV nicht bei 10 µA belassen wird, sondern sich ändert und bei 1 V z. B. 100 µA beträgt.

Der Ausgangsstrom des Regelverstärkers wird über ein RC-Glied einem Stellglied SG (U 208 B) zugeführt, welches die Leistungszufuhr zum Motor regelt.

Die Figur 2 zeigt eine Möglichkeit der Abhängigkeit des Ausgangsstromes ($i_{qmax}$) des Regelverstärkers RV in Abhängigkeit von der Spannung $U_{ist}$ und damit von der Drehzahl n des Motors. Die Kurve der Figur 2 ergibt sich aus der Beziehung $i_q$ = $i_{qmax}$ • (1 - 1/(1 + B • $\Delta U_e$)),wobei $I_q$ der Ausgangsstrom des Verstärkers, $i_{qmax}$ der maximale Ausgangsstrom des Verstärkers, $\Delta U_e$ die Differenzspannung zwischen der $U_{ist}$-Spannung und der $U_{soll}$-Spannung und B eine verstärkerspezifische Konstante sind.

## Patentansprüche

1. Schaltung zur Regelung der Drehzahl eines Motors (M) mit einem Regelverstärker (RV), der einen Strom ($i_q$) erzeugt, der von der Differenzspannung aus der der vorhandenen Drehzahl entsprechenden Spannung ($U_{ist}$) und der der gewünschten Drehzahl entsprechenden Spannung ($U_{soll}$) sowie von einem Strom gesteuert wird, der dem Regelverstärker (RV) zugeführt wird, dadurch gekennzeichnet, daß der dem Regelverstärker (RV) zugeführte Strom von der Drehzahl des Motors (M) abhängt.

2. Schaltung nach Anspruch 1, dadurch gekennzeichnet, daß eine gesteuerte Stromquelle (ST) vorgesehen ist, die den Strom für den Regelverstärker (RV) liefert, und daß diese Stromquelle von der der vorhandenen Drehzahl entsprechenden Spannung ($U_{ist}$) angesteuert wird.

## Claims

1. A circuit for regulating the speed of a motor (M) having a control amplifier (RV) which produces a current ($i_q$) which is controlled by the difference in voltage between the voltage ($U_{ist}$) corresponding to the present speed and the voltage ($U_{soll}$) corresponding to the desired speed and is controlled by a current which is supplied to the control amplifier (RV), **characterised in that** the current supplied to the control amplifier (RV) depends on the speed of the motor (M).

2. A circuit according to claim 1, **characterised in that** a controlled current source (ST) is provided which delivers the current for the control amplifier (RV) and that this current source is controlled by the voltage ($U_{ist}$) corresponding to the present speed.

## Revendications

1. Circuit pour réguler la vitesse de rotation d'un moteur (M) avec un amplificateur de régulation (RV) qui engendre un courant ($i_q$) commandé par la tension de différence entre la tension ($U_{ist}$) correspondant à la vitesse de rotation existante et la tension ($U_{soll}$) correspondant à la vitesse de rotation désirée, ainsi que par un courant qui est amené à l'amplificateur de régulation (RV), caractérisé par le fait que le courant amené à l'amplificateur de régulation (RV) dépend de la vitesse de rotation du moteur (M).

2. Circuit selon revendication 1, caractérisé par le fait qu'il est prévu une source de courant commandée (ST) qui fournit le courant pour l'amplificateur de régulation (RV), et par le fait que cette source de courant est commandée par la tension ($U_{ist}$) correspondant à la vitesse de rotation existante.

FIG. 1

FIG.2